# EUROPEAN PATENT APPLICATION

(11) **EP 0 572 730 A1**
(43) Date of publication of application: **08.12.1993**
(21) Application number: 92304977.9
(22) Date of filing: 01.06.1992
(51) Int. Cl.: G01N 15/06, B01D 35/143

(54) **Wear detector**

(71) Applicant: THE BOEING COMPANY, Seattle, Washington 98124-2499 (US)
(72) Inventor: Rumberger, William E., Newtown Square, Pennsylvania 19073 (US); Gross, Charles B., Norwood, Pennsylvania 19074 (US)
(74) Representative: Jennings, Nigel Robin

(57) **Abstract**

Apparatus for sensing the presence of metallic debris in a flowing fluid, such as lubricating oil, includes a housing (12) through which the fluid flows and a screen (14) mounted within the housing (12) arranged to retain debris entrained in the fluid. A first inductive coil (22a) is situated around a portion of the screen (14) such that debris retained by the screen is in contact with the inductive coil or in its immediate vicinity. A bridge circuit (40) is arranged to measure the change in inductance of the coil (22a) caused by the debris retained by the screen and to produce a signal indicative of the amount of debris so retained.

## Description

The invention relates to apparatus for sensing the presence of metallic debris in a fluid and is concerned with that type of such apparatus which includes a housing through which the fluid flows and a screen mounted within the housing arranged to retain debris entrained in the fluid.

Fluid systems used in mechanical devices for lubricating purposes or for transmitting power become contaminated by wear particles from the mechanical components of the device during operation of the machine. Such particles are produced by abrasion, chipping or spalling of bearings, gears and other metallic components subject to frictional forces. The detection of the presence of such debris, and particularly the amount of such debris, may be used to determine the amount of wear occurring in the device and also to predict impending failure of the device.

Apparatus of the type referred to above is disclosed in U.S. Patent 3,878,103 and U.S. Patent 3,686,926. This apparatus is intended to detect debris in the fluid of a hydraulic, lubricating, or cooling system and comprises a sensor housing within which is a woven mesh screen through which the fluid of the system flows and which retains debris entrained in the fluid. The screen includes a pair of electrical conductors of opposite polarity and the debris retained by the screen, such as metal spall flakes or chips from a transmission bathed in the fluid of the system, contacts the conductors and completes an electrical circuit. The apparatus is responsive to the electrical conductivity that occurs between the conductors and through the metallic debris and produces a signal indicating the presence of the debris. The apparatus includes a pressure sensor arranged to indicate the accumulation of debris on the screen.

Although the pressure sensor indicates the accumulation of debris, it does not indicate sufficiently small increments of the accumulation of debris and the total amount of the accumulation can not be suitably measured. Since the presence of small amounts of debris in the fluid is not always detectable, the time period in which a threshold amount of debris accumulates before that amount can be detected by the sensor is not always sufficient. Thus, the sensor often fails to indicate an impending failure of the system and cannot indicate the rate of accumulation which would indicate the impending failure. Furthermore, the limited number of electrical circuits available in the screen would prevent an accurate measurement of the rate of debris accumulation using the conductivity technique.

It is the object of the present invention to overcome the disadvantages of the prior art and to provide a relatively simple apparatus of the type referred to above which has a high sensitivity and produces a high level, useful signal indicating the presence of incremental amounts of debris and the rate of accumulation.

According to the present invention apparatus for sensing the presence of metallic debris of the type referred to above is characterized by a first inductive coil situated adjacent at least a portion of the screen and by means arranged to measure the change in inductance of the coil caused by debris retained by the screen and to produce a signal indicative of the amount of debris so retained.

Thus in the apparatus in accordance with the present invention metallic debris flowing with the fluid, or at least that debris which is sufficiently large to indicate abnormal wear or impending failure of a component, is retained and accumulated by the screen in contact with or in the immediate vicinity of the first inductive coil. This coil is energized with an alternating current whose frequency is selected in accordance with the operating conditions and the inductance of the inductive coil, which changes as metallic debris is retained in its vicinity, is measured and a signal is produced which is indicative of the amount of debris retained by the screen. The rate of change of the value of this signal is also indicative of the rate at which debris is accumulating on the screen. If the magnitude of this signal or of its rate of change exceeds a predetermined threshold this can be used as an indication that a component or device through or over which the fluid flows has suffered excess wear or is liable to failure in the near future. Since it is the continuously changing value of inductance of the coil which is measured rather than merely the presence or absence of electrical conductivity between two wires, the apparatus can sense even small incremental amounts of debris and is thus very sensitive and versatile.

The means for measuring the inductance of the coil may take many forms but preferably comprises a bridge circuit, one arm of which includes the coil.

Whilst the apparatus may have only a single inductive sensing coil, it may have a second such coil, and perhaps even more, situated adjacent at least a portion of the screen. If there are two such inductive sensing coils these are preferably connected into opposite arms of the bridge circuit.

The impedance of the or each inductive sensing coil changes not only as debris is accumulated by the screen but also as the temperature of the fluid alters. If the operating temperature of the fluid is known relatively accurately in advance, this can be compensated for relatively easily but if this is not the case it is preferred that the apparatus includes a temperature-compensating impedance, e.g. an inductive coil, which is exposed to the temperature of the fluid flowing through the housing and is connected into the arm of the bridge circuit adjacent that arm into which the or each inductive sensing coil is connected. The provision of such temperature-compensation means that the output of the bridge circuit remains substantially constant as the temperature of the fluid alters.

If the output signal of the sensing apparatus is simply proportional to the value of the inductance or of the change in the value of the inductance of the or each inductive sensing coil the sensitivity of the apparatus will be substantially constant over its entire operating range. Whilst this may be suitable for many applications, it may be desirable for the apparatus to have a greater sensitivity, that is to say ratio of the change of the output signal to the change in the amount of accumulated debris, over at least a portion of its operating range and this can conveniently be achieved by providing a first capacitor connected in parallel with the first inductive coil and by providing that the energizing means which supplies the alternating voltage to the first inductive coil has a supply frequency which is close to the resonant frequency of the circuit comprising the first capacitor and the first inductive coil. The energizing frequency can be such that the resonant circuit comprising the first capacitor and the first inductive coil is substantially in resonance when no debris is present and thus ceases to resonate when debris is accumulated, whereby a very substantial drop in apparent impedance occurs or alternatively the resonant circuit may be arranged not to be in resonance when no debris is present but to enter the resonant state as debris accumulates, e.g. when the crucial amount of debris indicating impending failure has accumulated. In this event, the temperature compensating impedance may be a simple temperature-dependent resistance or it too may be an inductance connected in parallel with a second capacitor to form a second resonant circuit and in this event the resonant frequencies of the two resonant circuits will be substantially the same.

The first inductive coil and the associated temperature-compensating coil may be arranged coaxially around a cylindrical portion of the screen and if they are arranged sequentially in the direction of flow of the fluid rather than overlapping one another the apparatus will preferably include a conical member within the screen, the conical member diverging in the direction of flow of the fluid and the periphery of the base of the conical member being situated adjacent the downstream end of the first inductive coil. This will mean that the debris is substantially all retained in the vicinity of the first inductive coil and substantially none of it is retained adjacent the temperature-compensating coil.

Further features and details of the invention will be apparent from the following description of certain specific embodiments which is given by way of example with reference to the accompanying drawings, in which:-
Figure 1 is a sectional view of a first embodiment of the invention;
Figure 2 is a circuit diagram of the bridge circuit used to measure the change in inductance of the sensing coil;
Figure 3 is a view similar to Figure 1 of a second embodiment of the invention; and
Figure 4 is a circuit diagram of a modified bridge circuit used to measure the change in inductance of the sensing coil of Figure 3.

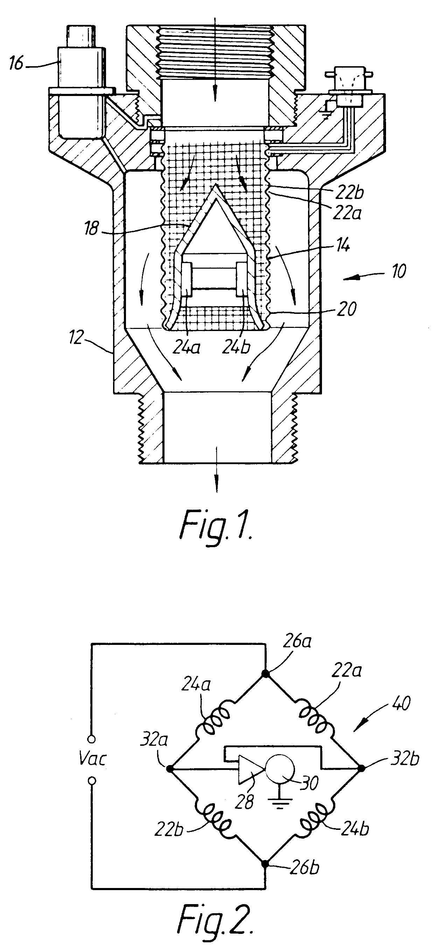

Referring to Figure 1, the sensor 10 comprises a metal housing 12, open at both ends to allow fluid, such as hydraulic, lubricating, or cooling fluid, to flow through it in the direction indicated by the arrows. A cylindrical screen 14 is mounted in the flow path of the fluid that passes through the housing 12 and arranged to retain or trap debris flowing with the fluid. The mesh of the screen 14 is sized to trap debris larger than a predetermined size, in this case 0.13 mm. The debris trapped by the screen is typical of failure debris and must be monitored closely, because this debris indicates the possibility of a complete failure of a system abroad an aircraft, for example. Smaller debris passes with the fluid through the screen 14 and this is typical of normal wear debris and is considered normal.

The screen 14 comprises a plurality of spaced parallel linear segments 20, e.g. of non-conductive material, extending parallel to the inlet and outlet flow direction. The screen 14 also includes a conductive wire 22a which is insulated in the manner of conventional transformer wire and extends in the form of a coil adjacent the segments 20 and in this case is woven between and is substantially perpendicular to the segments 20. The conductive wire 22a thus constitutes an inductor with a desired number of turns. When an alternating current is applied to the conductive wire 22a it produces a flux field and the value of its inductance remains relatively constant in the absence of metallic debris and serves as a reference value. However, in the presence of such debris retained by the screen 14, the inductance value of the conductive wire 22a changes. Such debris is typically of ferrous material comprising metal spall flakes or chips from a mechanism, such as a bearing or transmission, which the fluid carries to the screen 14. The change in inductance of the wire 22a over time indicates a change in the amount of debris accumulated by the screen. From this information the rate of accumulation of debris can also be obtained.

The sensor 10 also includes a pressure differential sensor 15 which communicates with the spaces upstream and downstream of the screen 14 and senses the pressure differential across the screen and a conical member 18 within the screen. The pressure differential is indicative of the amount of debris retained by the screen and it will be appreciated that this value may be very valuable in addition to the indication of the change of inductance of the wire 22a if the composition of the debris is not known. Thus the fluid circuit may include two or more components of differing metallurgical composition or a given change of inductance of the wire 22a may be caused by one amount of debris of one composition and a differing amount of debris of a differing composition. Thus suitable processing of the output of the pressure differential sensor and of the value of the inductance may produce not only an indication that a component or assembly is about to fail but also an indication of which component or assembly. The conical member 18 directs the fluid flow through the screen and ensures that no liquid can flow straight through without passing through the screen mesh.

Tests have been conducted to establish the principle of the invention. A screen as described above was connected to a 4192A LF Impedance Analyser (5Hz to 13MHz) manufactured by Hewlett-Packard Co. For simplicity, a bolt, representing debris that might be trapped in the screen 14, was placed inside the screen and AC signals of various frequencies were sequentially applied to the conductive wire 22a. The table below illustrates that changes in inductance indicate the presence of the bolt within the screen over a wide range of frequencies.

| FREQUENCY (at volt) | INDUCTANCE (in micro-henries) | |
|---|---|---|
| | Without Bolt | With Bolt |
| 100Hz | 20 | 30 |
| 400Hz | 10 | 20 |
| 1KHz | 6 | 10 |
| 5KHz | 6 | 8 |
| 10KHz | 5.3 | 6.7 |
| 100KHz | 5.18 | 5.33 |
| 1MHz | 4.961 | 5.170 |

The actual frequency used in any particular case will depend on the circumstances and the composition of the debris which it is desired to detect.

The inductance of the wire 22a may be measured in a variety of ways but it is preferred that a bridge circuit 40 as shown in Figure 2 is used. The bridge can be arranged to be in balance when no debris is present and subsequently the degree of imbalance will be indicative of the amount of debris retained by the screen 14.

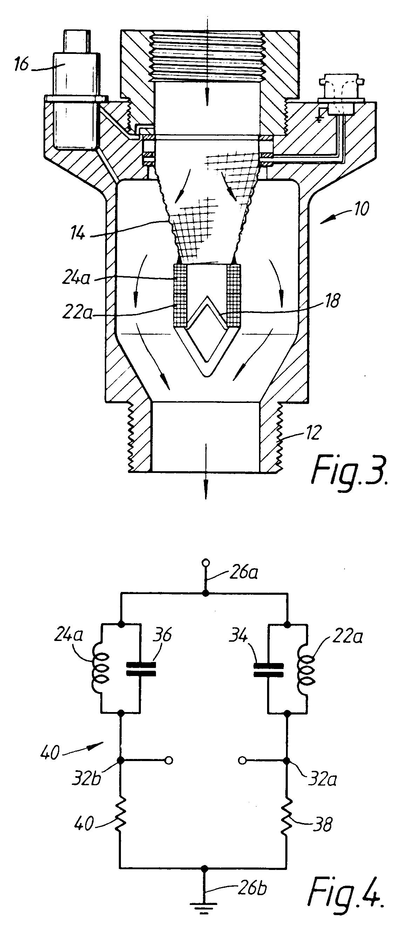

Whilst only one sensing inductance coil may be used, the sensitivity of the sensor is increased if a further such coil 22b is provided woven into the screen 14 in a manner similar to the wire 22a. The wires 22a and 22b are then provided in opposing arms of the bridge circuit, as shown in Figure 3.

While the inductance of the wires 22a, 22b is substantially constant in the absence of debris it can vary significantly with temperature. This can be accommodated by ensuring that the impedance of the adjacent arm of the bridge is such that the bridge is in balance at the anticipated operating temperature but in many cases the operating temperature is variable or is not known with any precision and for this reason it is preferred that the sensor has a temperature compensating facility. This is conveniently provided by providing inductors or resistors 24a, 24b, which conveniently comprise conductive wires similar to the wires 22a, 22b, in the other two arms of the bridge which are subjected to the same temperature as the wires 22a, 22b and impedance therefore alters with temperature as that of the wires 22a, 22b does so. In this case this is achieved by mounting the inductors 24a, 24b within the conical member 18 where their inductance is not affected by the accumulation of debris on the screen 14.

In use, an alternating voltage Vac is applied to the bridge circuit across the junction 26a of the conductive wires 22a and 24a and the junction 26b of the conductive wires 22b and 24b. An amplifier 28 and a meter 30 are connected to the bridge circuit across junctions 32a and 32b. The meter indicates changes in inductance of the conductive wires 22a and 22b as debris accumulates on the screen 14 in contact with or in the immediate vicinity of the wires 22a and 22b. The inductance values are correlated to the accumulated amount of debris in e.g. a table or an electronic memory.

The embodiment described above relies on the measurement of the change of inductance of one or more inductance coils as metallic debris accumulates in its vicinity and this change of inductance is very roughly proportional to the amount of debris accumulated. Whilst this may be satisfactory for many applications, a more sensitive sensing apparatus may be desirable for certain applications and for those applications the apparatus illustrated in Figures 3 and 4 may be more appropriate.

The mechanical components of the sensor illustrated in Figure 3 are generally similar to those illustrated in Figure 1 and the same reference numerals are used to designate similar components. In this case the screen 14 has an upstream portion of conical shape converging in the direction of flow and a downstream portion of cylindrical shape extending around which is a single inductive sensing coil 22a. Above the coil 22a is a single temperature compensating coil 24a. The conical member 18 is positioned and dimensioned to ensure that debris particles which flow into the cylindrical portion of the screen 14 accumulate adjacent the sensing coil 22a and not the coil 24a. The position of the coils 22a and 24a could be reversed and in this event the position of the conical member 18 will be altered accordingly.

The coils 22a and 24a are connected in adjacent arms of a bridge circuit 40 and, as shown in Figure 4, respective capacitors 34, 36 are connected in parallel with them. Each coil thus forms part of a respective resonant circuit and the resonant frequency of each of the circuits is substantially the same. In one specific example the two inductive coils have an inductance of 1.8 millihenrys and the capacitors have a capacitance of 120 picofarads. The other two arms of the bridge circuit are constituted by fixed impedances 38 and 40.

In use, the bridge circuit is excited, preferably with a sinusoidal waveform, with a frequency which is close to and preferably substantially equal to the resonant frequency of the two resonant circuits at the anticipated operating temperature of the system across the two junctions 26a and 26b. The output of the bridge circuit is measured across the junctions 32a and 32b in a manner similar to that described above. The apparent impedance of the resonant circuit constituted by the components 22a and 34 is very considerable when the exciting frequency is the resonant frequency but as metallic debris accumulates the value of the impedance of the coil 22a will alter. The exciting frequency remains constant and thus the circuit 34, 22a will move out of resonance or into resonance, depending on the relationship of the applied frequency to the resonant frequency when no debris is present. The apparent impedance of the circuit 22a, 34 will therefore change very substantially which means that the output of the bridge circuit will change very substantially also for a very small change in the amount of accumulated debris. In practice, the applied frequency will be such in relation to the resonant frequency that the maximum rate of change of the bridge circuit will occur at that level of accumulated debris at which the maximum sensitivity of the sensor is required. It is found that such an apparatus can reliably indicate the presence of as little as 5 mg of ferromagnetic debris though, as mentioned above, the apparatus of the present invention can detect the presence of debris of metals other than ferrous metals.

It will be appreciated that numerous modifications may be effected to the embodiments described above and the features of the two embodiments may be interchanged. Thus, for instance, the temperature compensating coil 24a in the embodiment of Figures 3 and 4 need not have a capacitor in parallel with it and it may be a simple temperature-dependent resistor or inductor. It is not essential tht the temperature compensating impedance by physically close to the inductive sensing coil and all that is important is that it is exposed to the same temperature as the inductive sensing coil. The sensing apparatus may include a removable permanent magnet situated so that debris retianed by the screen is washed onto it and retained by it in a position where it will alter the inductance of the sensing coil. The magnet can then be removed at any desired time and the debris can be subjected to a physical or chemical examination.

## Claims

1. Apparatus for sensing the presence of metallic debris in a flowing fluid including a housing through which the fluid flows and a screen mounted within the housing arranged to retain debris entrained in the fluid characterised by a first inductive coil (22a) situated adjacent at least a portion of the screen (14) and by means (14) arranged to measure the change in inductance of the coil (22a) caused by debris retained by the screen (14) and to produce a signal indicative of the amount of debris so retained.

2. Apparatus as claimed in Claim 1 characterised in that the means (40) for measuring the inductance of the coil (22a) comprises a bridge circuit, one arm of which includes the coil (22a).

3. Apparatus as claimed in Claim 2 characterised by a second inductive coil (22b) which is situated adjacent at least a portion of the screen (14) and which is connected into the arm of the bridge circuit (40) opposite to the arm into which the first inductive coil (22a) is connected.

4. Apparatus as claimed in Claim 2 or 3 characterised by a respective temperature-compensating impedance (24a, 24b) which is exposed to the interior of the housing (12) and is connected into the arm of the bridge circuit adjacent the arm into which the or each coil (22a, 22b) is connected whereby the output of the bridge circuit remains substantially constant as the temperature of the fluid alters.

5. Apparatus as claimed in Claim 2 or Claims 2 and 4 characterised by a first capacitor (34) connected in parallel with the first inductive coil (22a) and that energising means is provided for supplying an alternating voltage (Vc) to the first inductive coil (22a), the frequency of which is close to the resonant frequency of the circuit comprising the first capacitor (34) and the first inductive coil (22a).

6. Apparatus as claimed in Claims 4 and 5 characterised in that the temperature-compensating impedance (24a) associated with the first inductive coil (22a) is in the form of a temperature compensating inductive coil and that a second capacitor (36) is connected in parallel with the temperature-compensating impedance (24a), the resonant frequency of the circuit comprising the second capacitor (36) and the associated temperature compensating impedance (24a) being substantially the same as that of the circuit comprising the first capacitor (34) and the first inductive coil (22a).

7. Apparatus as claimed in any one of Claims 4 to 6 characterised in that the temperature-compensating inductive coil (24a) is arranged coaxially with the first inductive coil (22a) around a cylindrical portion of the screen (14).

8. Apparatus as claimed in Claim 7 characterised in that the temperature-compensating inductive coil (24a) and the first inductive coil are arranged sequentially in the direction of flow of the fluid and that a conical member (18) is provided within the screen (14), the conical member (18) diverging in the direction of flow of the fluid and the periphery of the base of the conical member being situated-adjacent the downstream end of the first inductive coil (22a), whereby substantially no debris is retained by the screen (14) adjacent the temperature-compensating inductive coil (24a).
